# EUROPEAN PATENT APPLICATION

(11) **EP 1 284 552 A2**
(43) Date of publication of application: **19.02.2003**
(21) Application number: 01128665.5
(22) Date of filing: 01.12.2001
(51) Int. Cl.: H04L 12/28

(54) **Wireless interconnecting device and LAN system**

(30) Priority: 15.08.2001 JP 2001246353; 29.08.2001 JP 2001259595
(71) Applicant: Allied Telesis K. K., Shinagawa-ku, Tokyo 141-8635 (JP)
(72) Inventor: Sato, Takayuki, Shinigawa-ku, Tokyo, 141-8635 (JP)
(74) Representative: Gesthuysen, von Rohr & Eggert

(57) **Abstract**

A layer 3 type wireless interconnecting device (4) connected to a LAN backbone line (1) is enabled to exchange packets with wireless terminals via a cable connection type wireless interconnecting device (5), non-cable connection type wireless interconnecting devices, and these wireless interconnecting devices (4) each are configured so that, in a case where a received packet is to be transmitted to the wireless terminals belonging thereto, the packet is transmitted with a tag removed when the packet is tagged, while, when the packet is to be transferred, whether or not a VLAN identifier needs to be attached thereto is judged and the packet is transferred with a VLAN identifier attached thereto when necessary, and thereby a wireless VLAN is realized.

## Description

The present invention relates to a wireless interconnecting device which is used in a so-called radio LAN (Local Area Network) system and a program which is used therein, in particular, to a VLAN construction method in a wireless LAN system, a method and a program for detecting and processing a movement of a terminal in a LAN system, and further, to a wireless interconnecting device and a wireless LAN system which are used for realizing the above.

As networking of computers is becoming easier than before according to improvement in performance and price reduction of personal computers, and so forth, so-called LANs (Local Area Networks) on various scale are becoming popular.

As a form of the LAN, a radio LAN conforming to IEEE802.11b which enables connection between terminals and a network via a radio channel has drawn more attention recently because it has such advantages that the terminals can be connected with the network regardless of their locations and that jobs for wiring and the like are very much reduced compared with a so-called wired LAN, and, therefore, various arts related to the radio LAN have been proposed (refer to, for example, Japanese Patent Laid-open No. Hei 8-139723, and so forth).

In the radio LAN, a wireless interconnecting device, generally called an access point, having a function of mediating exchange of packets between the network and the terminals by communicating with the terminals via the radio channel is used.

Since such a wireless interconnecting device is basically a so-called repeater which only repeats the packets by amplifying packet signals, terminals which belong to different subnets cannot belong to the same wireless interconnecting device. In other words, a wireless interconnecting device and terminals (hereinafter referred to as " wireless terminals") belonging to the wireless interconnecting device usually have to belong to the same subnet.

Therefore, there has been a disadvantage that, if a wireless terminal is moved between wireless interconnecting devices which belong to different subnets, it is not possible for the wireless terminal to perform communication with no change added, and a setting of an IP address for the moved wireless terminal is required at the wireless interconnecting device to which the wireless terminal newly belongs, and, as a result, the primary merit of a wireless LAN system, namely the easy movement of terminals, is reduced.

Moreover, if a wireless terminal is to belong to a different subnet from that it originally belonged according to a move of the wireless terminal, a different operation is required according to policies which differ depending on each subnet, which results in deteriorated ease-of-use, and also causes the problems that reliability of security is lowered and that useless traffic occurs because a so-called packet filtering is difficult.

It is desirable, in such a wireless LAN system, if a terminal can be moved for use to freely change a wireless interconnecting device to which the terminal belongs because the primary convenience of the radio LAN is improved.

Therefore, various methods are proposed for efficiently performing such processing (refer to, for example, Japanese Patent Laid-open No. Hei 8-307446).

However, the method disclosed, for example, in the Japanese Patent Laid-open No. Hei 8-307446 has a problem that efficiency of traffic is lowered because, when a terminal is moved, the information on the movement is broadcast to the same segment, so that packets are sent even to devices which do not require the information thereby causing useless traffic.

It is an object of the present invention to provide a wireless VLAN construction method, a VLAN packet processing program for a wireless interconnecting device, a recording medium on which the VLAN packet processing program for the wireless interconnecting device is recorded, a wireless interconnecting device having VLAN function and a wireless VLAN system, which enable wireless terminals belonging to different subnets to function as terminals which are under the control of one wireless interconnecting device.

It is another object of the present invention to provide a wireless VLAN construction method, a VLAN packet processing program for a wireless interconnecting device, a recording medium on which the VLAN packet processing program for the wireless interconnecting device is recorded, a wireless interconnecting device having VLAN function and a wireless VLAN system, which do not require resetting of an IP address and enable communication even if a wireless terminal is moved to a wireless interconnecting device belonging to a different subnet.

It is still another object of the present invention to provide a wireless VLAN construction method, a VLAN packet processing program for a wireless interconnecting device, a recording medium on which the VLAN packet processing program for the wireless interconnecting device is recorded, a wireless interconnecting device having VLAN function and a wireless VLAN system, which can suppress occurrence of useless traffic.

It is yet another object of the present invention to provide a method for detecting a movement of a terminal in a LAN system, a program for detecting and processing a movement of a terminal, a recording medium on which the program for detecting and processing a movement of a terminal is recorded, an administrative device for the LAN system and the LAN system which make easy to detect a movement of a terminal and to smoothly perform processing required according to the movement without lowering traffic efficiency.

It is yet another object of the present invention to provide a method for detecting a movement of a terminal in a LAN system, a program for detecting and processing a movement of a terminal, a recording medium on which the program for detecting and processing a movement of a terminal is recorded, an administrative device for a LAN system and a LAN system which make a movement of a terminal easier than conventional arts.

The above objects are at least partially achieved by the subject-matter of any one of the independent claims. Preferred embodiments are subject of the subclaims.

In order to achieve the objects described above, a first embodiment of the present preferably invention provides
a wireless VLAN construction method in a wireless LAN system in which a LAN backbone line wired with network devices is provided with wireless terminals enabled to exchange packets with wired side via a wireless interconnecting device, in which
in the wireless interconnecting device, a VLAN group is assigned to each of the wireless terminals belonging to the wireless interconnecting device based upon a MAC address of each of the wireless terminals, and administrative information on the wireless terminals is stored, and
in the wireless interconnecting device, whether a received packet is tagged or untagged is judged, and, in a case where the packet is judged to be tagged, the packet is transmitted with a tag removed when the packet is unicast and needs to be transmitted to a wireless terminal belonging to the wireless interconnecting device, while the packet is transferred when the packet is broadcast, and transmitted with the tag removed when the packet is broadcast and needs to be transmitted to a wireless terminal belonging to the wireless interconnecting device, and,
in a case where the received packet is judged to be untagged in the judgment whether the received packet is tagged or untagged, when the untagged packet is unicast, a corresponding VLAN identifier is obtained from the administrative information based upon a destination MAC address of the packet and the packet is transferred with the VLAN identifier attached thereto, while, when the untagged packet is broadcast, a corresponding VLAN identifier is obtained from the administrative information based upon a destination IP address of the packet and the packet is transferred with the VLAN identifier attached thereto, and thereby a wireless VLAN is realized.

In the configuration, wireless terminals belonging to different subnets can be operated under the control of one wireless interconnecting device and a wireless VLAN is easily realized because a so-called MAC address-based VLAN setting for a wireless terminal is performed in the wireless interconnecting device in such a manner that, in the wireless interconnecting device, whether or not a received packet is directed to a wireless terminal belonging to the wireless interconnecting device is judged, and, when the packet is directed to a wireless terminal belonging to the wireless interconnecting device, the packet is transmitted to the wireless terminal with a tag removed when a VLAN identifier is attached thereto as a tag, and, when the packet needs to be transferred, whether or not a VLAN identifier needs to be attached as a tag is judged, and the packet is transferred with the VLAN identifier as a tag attached thereto when it is necessary, and further, when the received packet is not from a wireless terminal which is registered in advance as a terminal belonging to the wireless interconnecting device, various information on the wireless terminal is registered as administrative information relative to the MAC address of the wireless terminal.

In order to achieve the objects described above, a second embodiment of the present invention preferably provides
a VLAN packet processing program for a wireless interconnecting device executed therein for constructing a wireless VLAN in a wireless LAN system in which a LAN backbone line wired with network devices is provided with wireless terminals enabled to exchange packets with wired side via the wireless interconnecting device, in which
the VLAN packet processing program enables the wireless interconnecting device to assign a VLAN group to each of the wireless terminals belonging to the wireless interconnecting device based upon a MAC address of each of the wireless terminals, and causes the wireless interconnecting device to store administrative information on the wireless terminals as a reference table, and
causes the wireless interconnecting device to perform the following VLAN packet processing steps:
   whether a received packet is tagged or untagged is judged, and, in a case where the packet is judged to be tagged, the packet is transmitted with a tag removed when the packet is unicast and needs to be transmitted to a wireless terminal belonging to the wireless interconnecting device, while the packet is transferred when the packet is broadcast, and transmitted with the tag removed when the packet is broadcast and needs to be transmitted to a wireless terminal belonging to the wireless interconnecting device, and,
   in a case where the received packet is judged to be untagged in the judgment whether the received packet is tagged or untagged, when the untagged packet is unicast, a corresponding VLAN identifier is obtained from the administrative information based upon a destination MAC address of the packet and the packet is transferred with the VLAN identifier attached thereto, while, when the untagged packet is broadcast, a corresponding VLAN identifier is obtained from the administrative information based upon a destination IP address of the packet and the packet is transferred with the VLAN identifier attached thereto.

In order to achieve the objects described above, a third embodiment of the present invention preferably provides
a recording medium on which recorded is a computer-readable VLAN packet processing program for a wireless interconnecting device to be executed therein for constructing a wireless VLAN in a wireless LAN system in which a LAN backbone line wired with network devices is provided with wireless terminals enabled to exchange packets with wired side via the wireless interconnecting device, in which
the VLAN packet processing program enables the wireless interconnecting device to assign a VLAN group to each of the wireless terminals belonging to the wireless interconnecting device based upon a MAC address of each of the wireless terminals, and causes the wireless interconnecting device to store administrative information on the wireless terminals as a reference table, and
causes the wireless interconnecting device to perform the following VLAN packet processing steps:
   whether a received packet is tagged or untagged is judged, and, in a case where the packet is judged to be tagged, the packet is transmitted with a tag removed when the packet is unicast and needs to be transmitted to a wireless terminal belonging to the wireless interconnecting device, while the packet is transferred when the packet is broadcast, and transmitted with the tag removed when the packet is broadcast and needs to be transmitted to a wireless terminal belonging to the wireless interconnecting device, and,
   in a case where the received packet is judged to be untagged in the judgment whether the received packet is tagged or untagged, when the untagged packet is unicast, a corresponding VLAN identifier is obtained from the administrative information based upon a destination MAC address of the packet and the packet is transferred with the VLAN identifier attached thereto, while, when the untagged packet is broadcast, a corresponding VLAN identifier is obtained from the administrative information based upon a destination IP address of the packet and the packet is transferred with the VLAN identifier attached thereto.

In order to achieve the objects described above, a fourth embodiment of the present invention provider provides
a wireless interconnecting device in a wireless LAN system in which a LAN backbone line wired with network devices is provided with wireless terminals enabled to exchange packets with wired side via the wireless interconnecting device, in which
the wireless interconnecting device is enabled to assign a VLAN group to each of the wireless terminals belonging thereto based on a MAC address of each of the wireless terminals and to store administrative information of the wireless terminals, and
the wireless interconnecting device judges whether a received packet is tagged or untagged and, in a case where the packet is judged to be tagged, transmits the packet with a tag removed when the packet is unicast and needs to be transmitted to a wireless terminal belonging to the wireless interconnecting device, while transferring the packet when the packet is broadcast, and transmitting the packet with the tag removed when the packet is broadcast and needs to be transmitted to a wireless terminal belonging to the wireless interconnecting device, and,
in a case where the received packet is judged to be untagged in the judgment whether the received packet is tagged or untagged, when the untagged packet is unicast, obtains a corresponding VLAN identifier from the administrative information based upon a destination MAC address of the packet and transfers the packet with the VLAN identifier attached thereto, while, when the untagged packet is broadcast, obtaining a corresponding VLAN identifier from the administrative information based upon a destination IP address of the packet and transferring the packet with the VLAN identifier attached thereto.

In order to achieve the objects described above, a fifth embodiment of the present invention preferably provides
a method arranged for detecting a movement of a terminal in a LAN system, which includes the steps of:
receiving, in an administrative device, device identification information of a moved terminal transmitted from a interconnecting device to which the terminal is moved, and judging that the terminal is moved when a discrepancy of information on the terminal having the device identification information is found in a database composed of information on terminals stored in advance in the administrative device together with the device identification information.

In this arrangement, since the administrative device naturally recognizes the interconnecting device when it receives the device identification information of the moved terminal sent from the interconnecting device to which the terminal is moved while information on a interconnecting device to which a terminal belongs and so forth is also included in the database composed of various information on each terminal stored in advance in the administrative device, a discrepancy occurs with the information in the database if a terminal is moved, which is utilized in the detection method. In other words, if a terminal is moved, a discrepancy occurs between the information on a interconnecting device related to the terminal and so forth in the database and the information on a interconnecting device to which the terminal is moved and which is recognized by the administrative device, so that it is made possible to judge that the terminal is moved and, unlike conventional arts, a movement of a terminal can be easily detected.

In order to achieve the objects described above, a sixth embodiment of the present invention preferably provides
a program for detecting and processing a movement of terminal to be executed in an administrative device provided in a LAN system to perform administration of the system, having the following steps:
a first step to receive device identification information of a moved terminal from a interconnecting device to which the terminal is moved;
a second step to detect a discrepancy of information in a database composed of information on terminals stored in advance in the administrative device together with the device identification information; and
a third step to update the database according to a judgment that the terminal is moved when the discrepancy of the information on the terminal having the device identification information is found in the database.

In order to achieve the objects described above, a seventh embodiment of the present invention preferably provides
a recording medium on which recorded is a program for detecting and processing a movement of a terminal to be executed in an administrative device provided in a LAN system to perform administration of the system, the program having the following steps:
a first step to receive device identification information of a moved terminal from a interconnecting device to which the terminal is moved;
a second step to detect a discrepancy of information in a database composed of information on terminals stored in advance in the administrative device together with the device identification information;
a third step to update the database according to a judgment that the terminal is moved when the discrepancy of information on a terminal having the device identification information is found in the database;
a fourth step, after updating the database, to transmit the updated data to the interconnecting device from which the device identification information is transmitted; and
a fifth step, when the discrepancy of the information on the terminal is detected, to instruct a interconnecting device from which the terminal is moved to delete the device identification information of the terminal and related information.

In order to achieve the objects described above, an eighth embodiment of the present invention preferably provides
an administrative device provided in a LAN system to perform administration of the system, which,
receiving device identification information of a moved terminal from a interconnecting device to which the terminal is moved, judges that the terminal is moved when a discrepancy of information on a terminal having the device identification information is found in a database composed of information on terminals stored in advance in the administrative device together with the device identification information, and, after updating the database, transmits the updated data to the interconnecting device from which the device identification information is transmitted while instructing a interconnecting device from which the terminal is moved to delete the device identification information of the terminal and related information.

The term "VLAN" can be understood preferably as a Virtual Local Area Network, i.e. preferably as a logical grouping of two or more nodes which are not necessarily on the same physical network segment but which share the same network number. This is often associated with switched Ethernet. In particular, the virtual LAN is used for grouping numerous computers together and configuring them with software (rather than via an arrangement of cables). This assists administrators in maintaining network management, and computers can be moved to various locations.

The term "MAC" or "MAC address" can be understood preferably as the hardware address of a device connected to a shared network medium, in particular as Media Access Control address, i.e. physical address of a device connected to a network, often expressed as a 48-bit hexadecimal number. In particular, the Media Access Control address is a hardware address that uniquely identifies each node of a network. In IEEE 802 networks, the Data Link Control (DLC) layer of the OSI Reference Model is divided into two sublayers: the Logical Link Control (LLC) layer and the Media Access Control (MAC) layer. The MAC layer interfaces directly with the network media. Consequently, each different type of network media requires a different MAC layer. On networks that do not conform to the IEEE 802 standards but do conform to the OSI Reference Model, the node address is called the Data Link Control (DLC) address.

Further details, aspects and advantages will explained with reference to the enclosed drawings. It shows:
- FIG. 1: a block diagram showing a configuration example of a wireless LAN system in an embodiment of the present invention;
- FIG. 2: a flow chart showing a procedure in the first half of a wireless VLAN packet processing in the embodiment of the present invention;
- FIG. 3: a flow chart showing a procedure starting from the step S102 in the last half of the wireless VLAN packet processing in the embodiment of the present invention;
- FIG. 4: a flow chart showing a procedure starting from the step S202 in the last half of the wireless VLAN packet processing in the embodiment of the present invention;
- FIG. 5: a flow chart showing a procedure starting from the step S302 in the last half of the wireless VLAN packet processing in the embodiment of the present invention;
- FIG. 6: a flow chart showing a procedure starting from the step S402 in the last half of the wireless VLAN packet processing in the embodiment of the present invention;
- FIG. 7 (A): an explanatory table showing an example of relationship between a MAC address and a VLAN group stored in a cable connection type wireless interconnecting device in a MAC address-based VLAN setting;
- FIG. 7 (B): an explanatory table showing an example of relationship between MAC addresses and VLAN groups stored in a first non-cable connection type wireless interconnecting device in the MAC address-based VLAN setting;
- FIG. 7 (C): an explanatory table showing an example of relationship between MAC addresses and VLAN groups stored in a second non-cable connection type wireless interconnecting device in the MAC address-based VLAN setting;
- FIG. 8: a schematic chart showing a VLAN identifier and general contents of a packet before and after the VLAN identifier;
- FIG. 9: a schematic chart showing contents of a reference table stored in a wireless interconnecting device;
- FIG. 10: a subroutine flowchart showing a procedure of terminal movement detecting and processing carried out in an administrative computer;
- FIG. 11: a schematic chart explaining a database stored in the administrative computer;
- FIG. 12: a subroutine flowchart showing a procedure of deletion processing of a wireless terminal carried out in a wireless interconnecting device from which a terminal is separated; and
- FIG. 13: a block diagram showing another configuration example of a wireless VLAN system in an embodiment of the present invention.

Preferred embodiments of the present invention will now be described in detail with reference to the drawings.

Incidentally, it is to be understood that the present invention is not intended to be limited to members, dispositions, and so forth thereof which will be described below, and various changes may be made therein without departing from the spirit of the present invention.

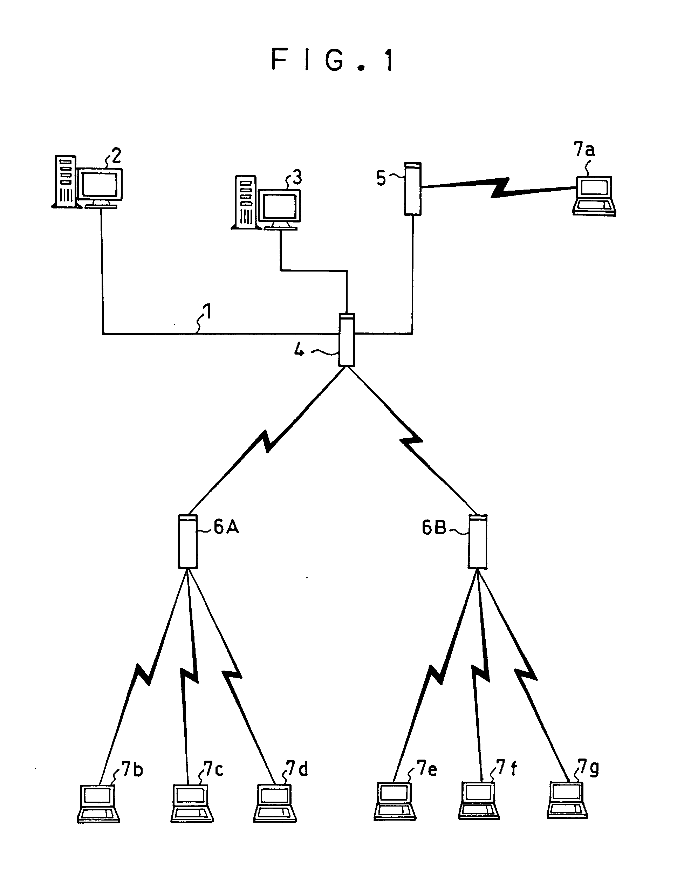

First, a configuration of a wireless VLAN system in an embodiment of the present invention is described with reference to FIG. 1.

The so-called hardware configuration of the wireless VLAN system of this embodiment is basically the same as that of the conventional wireless LAN system, in which a LAN backbone line 1 is provided, and various network apparatus are connected thereto by cables. More specifically, a server 2, an administrative computer 3 and a layer 3 type wireless interconnecting device 4, and, when it is necessary, a cable connection type wireless interconnecting device 5 are connected to the LAN backbone line 1.

Further, there provided are a plurality of non-cable connection type wireless interconnecting devices connected to the layer 3 type wireless interconnecting device 4 via radio channels, and, in the configuration of this embodiment, two non-cable connection type wireless interconnecting devices, namely, the first and the second non-cable connection type wireless interconnecting devices 6A and 6B are provided.

In addition, a plurality of wireless terminals 7a to 7g are provided, which exchange packets via a radio channel with the cable connection type wireless interconnecting device 5 and the first and the second non-cable connection type wireless interconnecting devices 6A and 6B.

The server 2 is a known server which performs processing in response to requests from the terminals (clients), and the server of this embodiment may be any kind of one and does not need to be limited to a particular kind although there are various types of servers having different roles such as file servers, print servers, and so forth.

The administrative computer 3 as an administration device is a computer for administrating the entire operation of the wireless LAN system and may serve as the above-described server 2 as well.

The layer 3 type wireless interconnecting device 4 in the embodiment according to the present invention is a conventional type wireless interconnecting device which, in other words, conforms to IEEE802.11 or IEEE802.11b and has a layer 3 switch function, and, in addition, has a so-called tagging VLAN function defined in IEEE802.1Q and further has a wireless VLAN packet processing function which will be described later.

The cable connection type wireless interconnecting device 5 in the embodiment is a wireless interconnecting device composed of a conventional type wireless interconnecting device, namely, a interconnecting device conforming to IEEE802.11 or IEEE802.11b and simply transferring packets exchanged between the wireless terminals and the wired LAN, to which added are a wireless VLAN packet processing function, which will be described later, and a MAC address-based VLAN setting function, which also will be described later. Incidentally, only one cable connection type wireless interconnecting device 5 is included in this configuration example but a configuration in which a plurality of the cable connection type wireless interconnecting devices are connected is also possible as a matter of course.

The basic configuration of the first and the second non-cable connection type wireless interconnecting devices 6A and 6B are similar to that of the cable connection type wireless interconnecting device 5 described above except that the wireless interconnecting devices 6A and 6B are structured to be able to communicate with the layer 3 type wireless interconnecting device 4 via a radio channel.

The wireless terminals 7a to 7g are usually the known terminals which each are composed of a NIC (Network Interface Card) having a radio transmitting/receiving function and a computer which is represented by a mobile personal computer.
In the configuration shown in FIG. 1, the wireless terminal 7a is under the control of the cable connection type wireless interconnecting device 5, that is, the wireless terminal 7a is situated in a state where packet exchange with the cable connection type wireless interconnecting device 5 can be performed.

The wireless terminals 7b to 7d are under the control of the first non-cable connection type wireless interconnecting device 6A while the wireless terminals 7e to 7g are under the control of the non-cable connection type wireless interconnecting device 6B. Incidentally, "under the control" means that a wireless terminal is in a range where it can communicate with a wireless interconnecting device via a radio channel and is in a state where the MAC address of the wireless terminal is stored in a predetermined memory area of the wireless interconnecting device together with other information (VLAN identifiers, and so forth) as described later.

In the embodiment according to the present invention, setting of a VLAN for the terminals on the wireless side, namely, for the wireless terminals, can be performed in the cable connection type wireless interconnecting device 5, the first and the second non-cable connection type wireless interconnecting device 6A and 6B as described below.

The setting is performed in such a manner that, for example, in the cable connection type wireless interconnecting device 5 a first VLAN (hereinafter referred to as "VLAN1") is assigned to the wireless terminal 7a, in the first non-cable connection type wireless interconnecting device 6A the VLAN1 is assigned to the wireless terminals 7b and 7c, a second VLAN (hereinafter referred to as "VLAN2") is assigned to the wireless terminal 7d, in the second non-cable connection type wireless interconnecting device 6B the VLAN2 is assigned to the wireless terminal 7e, and a third VLAN (hereinafter referred to as "VLAN3") is assigned to the wireless terminals 7f and 7g.

The VLAN setting may be performed by connecting a not-shown computer to the wireless interconnecting devices 5, 6A and 6B by a cable and conducting a setting in the computer for the wireless interconnecting devices 5, 6A and 6B each, or may be performed using the administrative computer 3.

By the VLAN setting, the relations between the MAC addresses of each of the wireless terminals 7a to 7g which are under the control of the wireless interconnecting devices 5, 6A and 6B and the VLAN groups to which the wireless terminals 7a to 7g each belong are stored in a predetermined memory area of each of the wireless interconnecting devices 5, 6A and 6B.

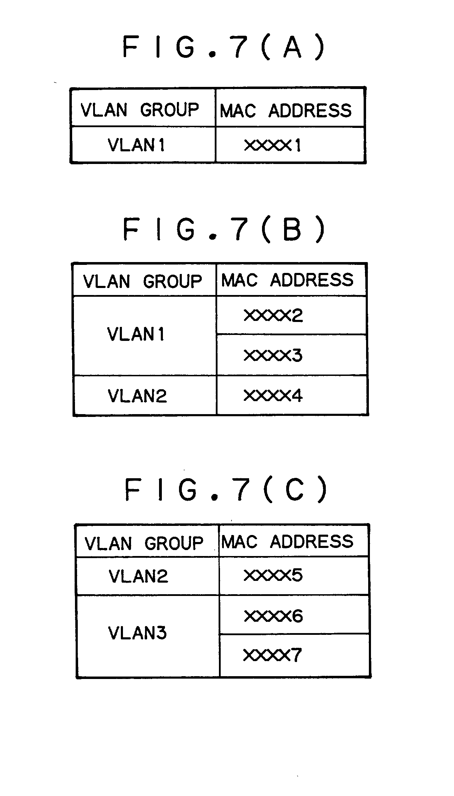

In the example described above, the relations shown in FIG. 7(A) to FIG. 7(C), for example, are stored. In the drawing, the MAC addresses are expressed in a simple form for convenience sake, wherein "xxxx1" is the MAC address of the wireless terminal 7a, "xxxx2" is the MAC address of the wireless terminal 7b, "xxxx3" is the MAC address of the wireless terminal 7c, "xxxx4" is the MAC address of the wireless terminal 7d, "xxxx5" is the MAC address of the wireless terminal 7e, "xxxx6" is the MAC address of the wireless terminal 7f, and "xxxx7" is the MAC address of the wireless terminal 7g.

As described above, the VLAN setting in the wireless interconnecting devices 5, 6A and 6B in the embodiment according to the present invention determines the VLAN groups in relation to the MAC addresses, which is a so-called MAC address-based VLAN setting.

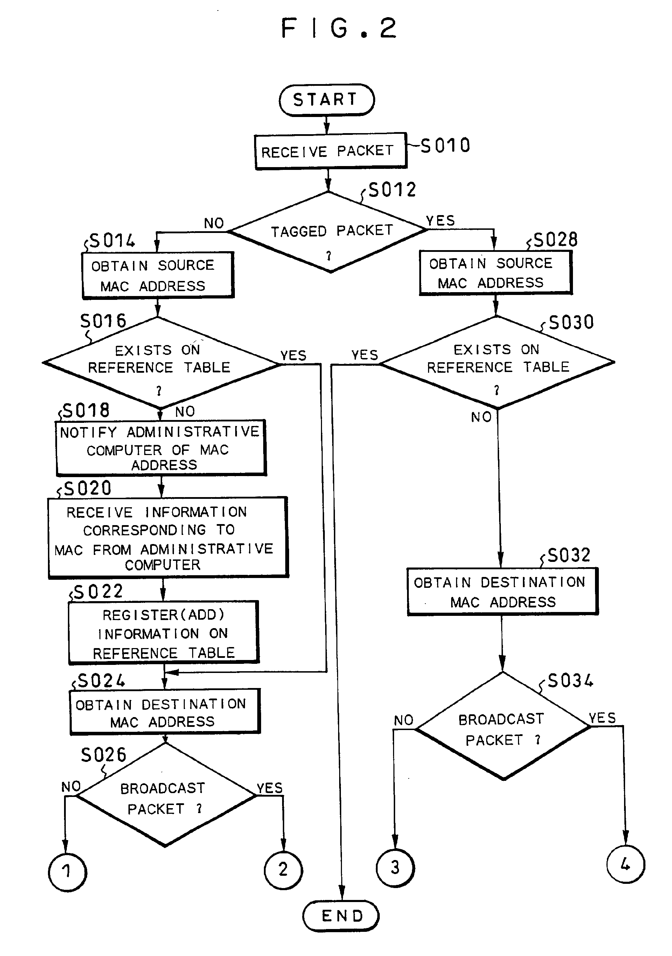

Then, the procedure of the packet processing executed in the layer 3 type wireless interconnecting device 4, the cable connection type wireless interconnecting device 5, the first and the second non-cable connection type wireless interconnecting devices 6A and 6B and the administrative computer 3 in the above described configuration is explained below referring to FIG. 2 through FIG. 12. Incidentally, in the following explanations, a general term "wireless interconnecting device" is used for the layer 3 type wireless interconnecting device 4, the cable connection type wireless interconnecting device 5, the first and the second non-cable connection type wireless interconnecting devices 6A and 6B when a common processing is executed therein while the individual names are used when a processing is executed in a particular wireless interconnecting device among the three kinds of wireless interconnecting devices described above.

When a processing starts, a wireless interconnecting device is first set in a packet receiving state in which a packet receiving is executed when a packet is inputted (see the step S010 in FIG. 2).

When a packet is received, whether the received packet is tagged or untagged is judged (see the step S012 in FIG. 2), and the processing proceeds to a step S028 when the packet is judged to be tagged (in the case of "YES"), while the processing proceeds to a processing step S014 when the packet is judged to be untagged (in the case of "NO").

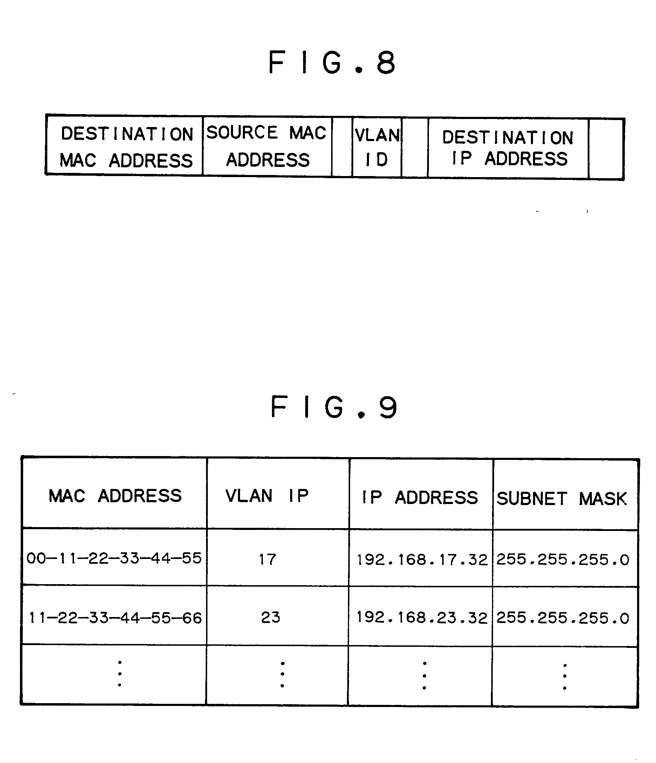

Incidentally, the tag attached to a packet is a VLAN identifier (VLAN ID) attached to a packet as shown in FIG. 8 based on the tagging VLAN function specified in IEEEE802.1Q.

FIG. 8 is a schematic chart showing general contents of a packet, namely a VLAN identifier and the contents attached before and after it, in which a destination MAC address and a source (sender) MAC address are disposed in the order named from the top of the portion before the VLAN identifier, and a destination IP address is disposed after the VLAN identifier.

At the previous step S012 in FIG. 2, when a packet is judged to be tagged (in the case of "YES"), it means that the packet is a transferred packet. Then, at the step S028, the source MAC address (see FIG. 8) contained in the received packet is read out. Thereafter, it is judged whether or not the source MAC address obtained at the above-described step S028 exists in a reference table (see the step S030 in FIG. 2).

Incidentally, the reference table is a table in each of the wireless interconnecting devices 5, 6A and 6B, showing relationships of various administrative information on each of the wireless terminals 7a to 7g which are under the control of those wireless interconnecting devices. More specifically, the administrative information includes, for example, a MAC address, a VLAN identifier added to identify a VLAN group assigned on MAC address base, an IP address and a subnet mask, for each of the wireless terminals 7a to 7g. On the reference table, the administrative information is expressed in forms corresponding to the MAC addresses, for example, in the form shown in FIG. 9, and is stored in an appropriate memory area of the wireless interconnecting devices. Incidentally, the VLAN identifier may either be added automatically when a VLAN group is designated in the VLAN setting in the wireless interconnecting devices 5a, 6A and 6B as described above, or be added by a so-called manual setting.

At the step S030, when the source MAC address previously obtained at the step S028 is judged to exist in the above-described reference table (in the case of "YES"), it means that the source of the transferred packet is a wireless terminal under the control of the wireless interconnecting device itself which received the transferred packet, and then the series of the processing is terminated as the packet does not need to be transferred to others.

On the other hand, at the step S030, when the source MAC address previously obtained at the step S028 is judged not to exist in the above-described reference table (in the case of "NO"), since it means that the packet is directed to a subnet other than the VLAN groups stored in the wireless interconnecting device, the destination MAC address is read out from the packet received at the previous step S010 (see the step S032 in FIG. 2).

Then, whether or not the packet previously received at the step S010 is a broadcast packet (see the step S034 in FIG. 2) is judged. Incidentally, as it is well known, whether or not a received packet is a broadcast packet is judged according to whether or not the destination MAC address contained in the packet is a predetermined code.

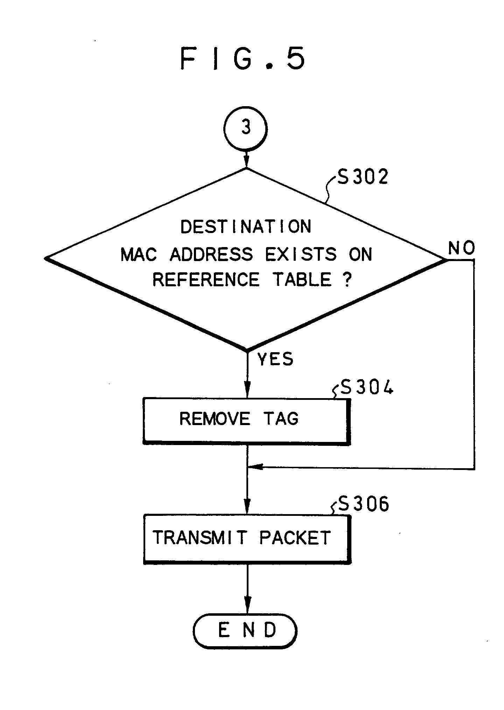

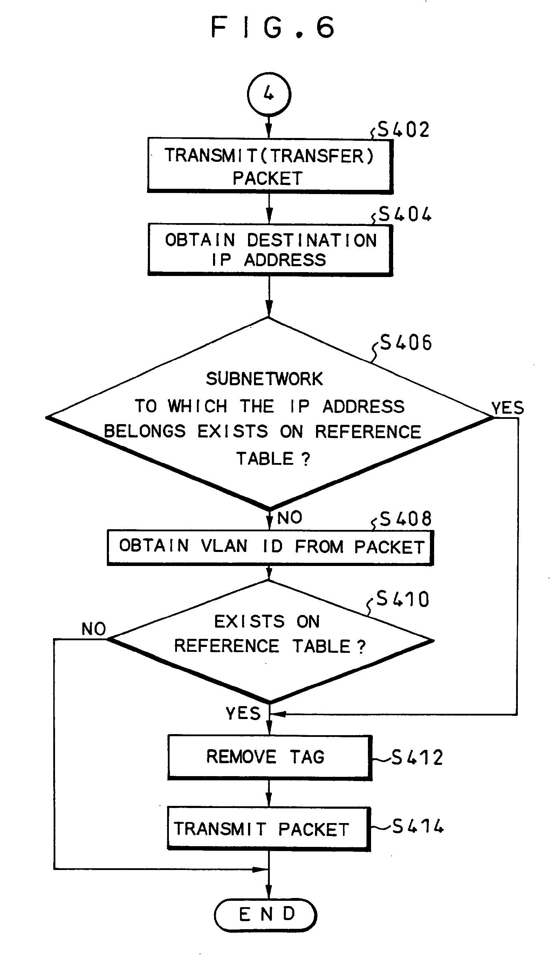

Thereafter, the processing proceeds to a step S402 which will be described later when the received packet is judged to be a broadcast packet at the step S034 (in the case of "YES"), or to a step S302 which will be described later when the packet is judged not to be a broadcast packet (in the case of "NO") because it means that the packet is a so-called unicast. Incidentally, the processing at and after the step S302 and the processing at and after the step S402 will be described later with reference to FIG. 5 and FIG. 6 respectively.

When the received packet is judged to be untagged (in the case of "NO") at the step S012, since it means that the packet is transmitted from a wireless terminal belonging to the wireless interconnecting device executing the processing, a source MAC address (refer to FIG. 9) is first read out from the received packet (see the step S014 in FIG. 2). Incidentally, as cases in which a wireless interconnecting device receives a packet from a wireless terminal belonging thereto, the following cases are considered in the configuration shown in FIG. 1.

That is, the cases are a case in which a packet is transmitted from the wireless terminal 7b to 7g to the first or the second non-cable connection type wireless interconnecting devices 6A or 6B, and a case in which a packet is transmitted from the wireless terminal 7a to the cable connection type wireless interconnecting device 5. Incidentally, in the configuration shown in FIG. 1, packets which are exchanged between the server 2 and the layer 3 type wireless interconnecting device 4 also are untagged packets although the server 2 is not a wireless terminal under the control of the layer 3 type wireless interconnecting device 4.

Then, whether or not the source MAC address obtained at the previous step S014 exists in the reference table (refer to FIG. 9) is judged. (See the step S016 in FIG. 2)

When the source MAC address obtained at the previous step S014 is judged to exist in the reference table (in the case of "YES") at the step S016, the processing proceeds to a step S024 which will be described later, while, when the source MAC address obtained at the previous step S014 is judged not to exist in the reference table (in the case of "NO"), since it means that the packet is transmitted from a wireless terminal which newly joined under the control of the wireless interconnecting device, the MAC address obtained at the step S014 is transmitted to the administrative computer 3 to be notified as device identification information (see the step S018 in FIG. 2). The case in which a new wireless terminal joins under the control of the wireless interconnecting device is such a case that the wireless terminal 7b is moved from under the control of the first non-cable connection type wireless interconnecting device 6A to under the control of the second non-cable connection type wireless interconnecting device 6B in the configuration shown in FIG. 1.

The administrative computer 3 receives the MAC address of the wireless terminal transmitted from the wireless interconnecting device by the processing at the above-described step S018 and updates a set of information for the MAC address.

Incidentally, the processing in the administrative computer 3 described above will be explained in more detail later.

It is desirable that the packet exchange between the administrative computer 3 and the wireless interconnecting device is executed depending upon, for example, the known SNMP (Simple Network Management Protocol) in the processing at the steps S018 and S020 described above. In other words, it is appropriate to have the known SNMP manager installed in the administrative computer 3, and SNMP agent installed in the wireless interconnecting device.

Then, the information transmitted by the administrative computer 3 is received at the step S020 as described above. In other words, the VLAN identifier of the VLAN to which the wireless terminal belongs, the IP address and the subnet mask corresponding to the MAC address of the wireless terminal which came into under the control of the new wireless interconnecting device are received.

Then, the received data is added to the reference table (refer to FIG. 9) of the wireless interconnecting device (see the step S022 in FIG. 2).

Thereafter, a destination MAC address is read out from the packet received at the previous step S010 (see the step S024 in FIG. 2).

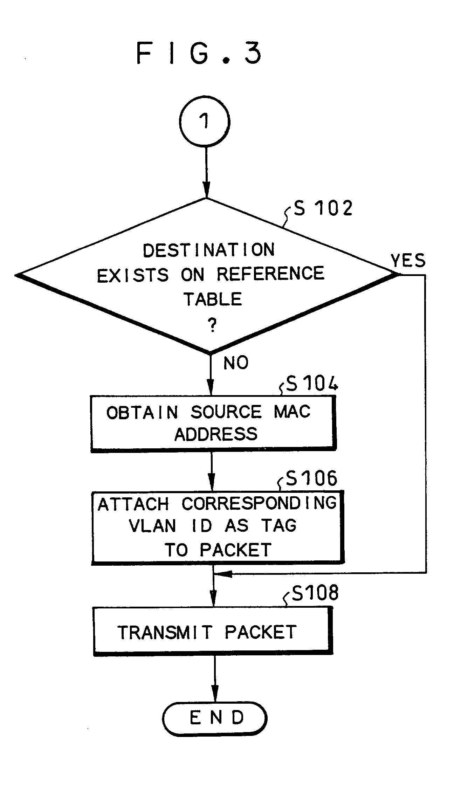

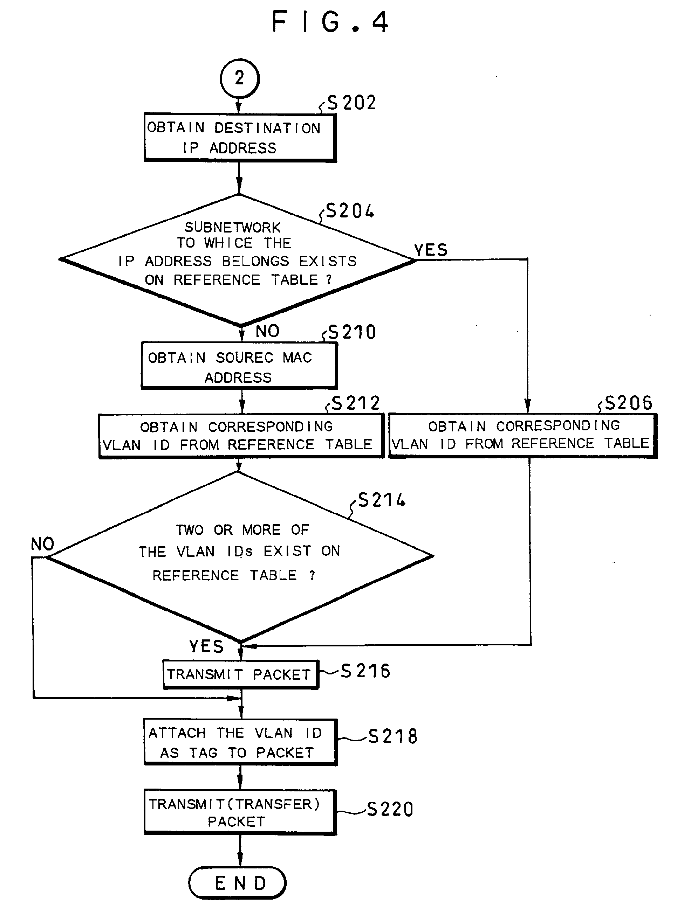

Then, whether or not the packet received at the previous step S010 is a broadcast packet is judged (see the step 026 in FIG. 2). When the received packet is judged to be a broadcast packet (in the case of "YES"), the processing proceeds to a step S202 (refer to FIG. 4) which will be described later, while, when the received packet is judged not to be a broadcast packet (in the case of "NO"), since it means that the packet is a unicast, the processing proceeds to a step S102 (refer to FIG. 3) which will be described later.

Then, the subsequent processing will be explained below with reference to FIG. 3 for the processing at and after the step S102, to FIG. 4 for the processing at and after the step S202, to FIG. 5 for the processing at and after the step S302 and to FIG. 6 for the processing at and after the step S402 in the order named.

First, the processing at and after the step S102 is explained referring to FIG. 3. At the step S102, since the received packet was judged to be not a broadcast packet at the previous step S026 (refer to FIG. 2) and it means that the received packet is unicast, whether or not the destination MAC address obtained at the previous step S024 (refer to FIG. 2) exists on the reference table in the wireless interconnecting device is first judged at the step S102 (refer to FIG. 3). When the destination MAC address is judged to exist on the reference table (in the case of "YES"), since it means that the packet is directed to a wireless terminal belonging to the wireless interconnecting device, the packet is transmitted with no change added, namely with no addition of tag (VLAN identifier) by the wireless interconnecting device (see the step S108 in FIG. 3).

When the destination MAC address obtained at the previous step S024 (refer to FIG. 2) is judged not to exist on the reference table in the wireless interconnecting device at the step S102 (in the case of "NO"), since the packet needs to be transferred, the source MAC address is first read out from the packet received at the previous step S010 (see the step S104 in FIG. 3).

Then, a VLAN identifier corresponding to the source MAC address is read out from the reference table (refer to FIG. 9) stored in the wireless interconnecting device using the source MAC address obtained at the step S104 as an index, and the identifier is then attached (see the step S106 in FIG. 3) as a tag (refer to FIG. 8) to the received packet (see the step S010 in FIG. 2) and the packet is transmitted for transferring (transfer transmission) (see the step S108 in FIG. 3), and thereby the series of the processing is terminated.

Incidentally, the case in which a so-called tagged packet is transmitted from the wireless interconnecting device as described above includes a case where the packet is transmitted from the first or the second non-cable connection type wireless interconnecting device 6A or 6B to the layer 3 type wireless interconnecting device 4, a case where the packet is transmitted from the cable connection type wireless interconnecting device 5 to the wired side (in other words, a case where the packet is transmitted from the cable connection type wireless interconnecting device 5 to the layer 3 type wireless interconnecting device 4) and a case where the packet is transmitted from the layer 3 type wireless interconnecting device 4 to the cable connection type wireless interconnecting device 5.

Next, the processing at and after the step S202 is explained referring to FIG. 4.

At the step S202, the destination IP address is first read out from the packet received previously at the step S010 (refer to FIG. 2) according to the judgment made at the previous step S026 (refer to FIG. 2) that the received packet is a broadcast packet.

Then, whether or not a wireless terminal belonging to the same subnetwork as the wireless terminal having the destination IP address exists on the reference table (refer to FIG. 9) is judged. (See the step S204 in FIG. 4)

Incidentally, as it is generally known, the product of an IP address and a subnet mask contained therein denotes a subnet (segment). Therefore, an operation is first executed based upon the above relational expression in order to know which subnetwork the destination IP address obtained at the step S202 belongs to, in other words, to know which subnet the destination IP address belongs to, and thereby a subnet is determined.

Then, whether or not a subnet to which a wireless terminal belongs is the same with the subnet to which the destination IP address obtained as described above belongs is judged one by one for the wireless terminals each having a MAC address on the reference table.

More specifically, the IP addresses are selected one by one from the reference table and a subnet is calculated by the operation described above, and whether or not the result of the calculation is the same with the subnet to which the destination IP address belongs is judged. The processing of the judgment is terminated at the point when a subnet is judged to be the same while the same processing is executed for the next IP address on the reference table when a subnet is not the same. Thus, the processing proceeds to a step S206 when a subnet is judged to be the same (in the case of "YES") while the processing proceeds to a step S210 when it is judged for all the IP addresses on the reference table that the subnet to which the IP address belongs is judged to be not the same with the subnet to which the destination IP address belongs (in the case of "NO").

The judgment made at the step S204, that is, a wireless terminal belonging to the same subnet as the subnetwork to which the wireless terminal having the destination IP address obtained at the step S202 exists on the reference table (refer to FIG. 9), means that the received packet is a directed broadcast. In other words, this case means that the received packet is a broadcast directed to a VLAN group other than the VLAN group to which the wireless terminal which transmitted the packet belongs.

Further, in this case, the packet not only needs to be transferred to another VLAN group but also needs to be transmitted to wireless terminals which are under the control of the wireless interconnecting device because the judgment "YES" made at the previous step S204 means that the wireless terminals belonging to the same subnetwork are under the control of the wireless terminal.

Therefore, the VLAN identifier of the wireless terminal whose subnetwork was judged, by the processing at the previous step S204, to be the same as the subnetwork to which the wireless terminal having the destination IP address obtained at the step S202 belongs, is first obtained from the reference table (refer to FIG. 8). (See the step S206 in FIG. 4)

Then, first at the step S216, the packet is transmitted to the wireless terminal which is under the control of the wireless interconnecting device. In other words, the packet is transmitted with no VLAN identifier attached thereto in this case.

On the other hand, at the step S204, when it is judged that a wireless terminal belonging to the same subnet as the destination IP address obtained at the step S202 does not exist on the reference table (refer to FIG. 9), it means that the received packet is a limited broadcast. In other words, this case means that the packet received at the step S010 (refer to FIG. 2) is a packet transmitted from a wireless terminal belonging to the wireless interconnecting device and is directed to all other terminals in the VLAN to which the wireless terminal belongs.

Therefore, the received packet needs to be transmitted to the wireless terminals which are under the control of the wireless interconnecting device and belong to a VLAN group to which the limited broadcast is directed, and also needs to be transferred so that it is transmitted to the wireless terminals which, belonging to another wireless interconnecting device, the limited broadcast is directed to.

Then, a source MAC address is first read out from the packet received at the step S010 (see the step S210 in FIG. 4). Then, a VLAN identifier corresponding to the source MAC address, namely the VLAN identifier of the VLAN to which the wireless terminal, which transmitted the packet, belongs is obtained from the reference table (see the step S212 in FIG. 4).

Then, it is judged whether or not there are two or more VLAN identifiers which are obtained at the above-described step S212 on the reference table, that is, whether or not there is any wireless terminal which belongs to the same VLAN group and is under the control of the wireless interconnecting device other than the wireless terminal which transmitted the packet received at the step S010 (see the step S214 in FIG. 4).

Thereafter, at the step S214, when it is judged that there are two or more VLAN identifiers which were obtained at the step S212 on the reference table (in the case of "YES"), the processing proceeds to the step S216, so that the packet is transmitted to the wireless terminal belonging to the wireless interconnecting device.

When it is judged that there are not two or more VLAN identifiers obtained at the step S212 on the reference table, that is, there is no wireless terminal having the same VLAN identifier other than the wireless terminal which transmits the packet received at the step S010 (in the case of "NO"), or after the processing of the above-described step S216 is complete, the VLAN identifier (refer to FIG. 8) obtained at the step S206 or the step S212 is first attached to the packet to be transferred (refer to FIG. 8 and the step S218 in FIG. 4), so that the packet is transferred to other wireless interconnecting devices. Then, the tagged packet to which the VLAN identifier is attached is transmitted for transferring by the wireless interconnecting device (see the step S220 in FIG. 4), and thereby the series of the processing is terminated. Incidentally, the cases where a packet is transferred by a wireless interconnecting device includes, in the configuration shown in FIG. 1 for example, a case where the cable connection type wireless interconnecting device 5 transmits the packet to the LAN backbone line 1, a case where the first or the second non-cable connection type wireless interconnecting devices 6A or 6B transmits the packet to the layer 3 type wireless interconnecting device 4, a case where the layer 3 type wireless interconnecting device 4 transmits the packet to the LAN backbone line 1 and a case where the layer 3 type wireless interconnecting device 4 radio-transmits to the first and the second non-cable connection type wireless interconnecting devices 6A and 6B.

Next, the processing at and after the step S302 is explained referring to FIG. 5.

At the step S302, whether or not the destination MAC address obtained by the processing at the previous step S032 (refer to FIG. 2) exists on the reference table (refer to FIG. 9) is judged. At the step S302, when it is judged that the destination MAC address obtained by the processing at the step S032 does not exist on the reference table (in the case of "NO"), since it means that no wireless terminal exists under the control of the wireless interconnecting device to which the received packet needs to be transmitted, the packet received at the step S010 (refer to FIG. 2) is transmitted for transferring (transmission for transferring) with no change added (see the step S306 in FIG. 5).

When it is judged at the step S302 that the destination MAC address obtained by the processing at the step S032 (refer to FIG. 2) exists on the reference table (in the case of "YES"), since it means that the packet received at the step S010 (refer to FIG. 2) needs to be transmitted to a wireless terminal belonging to the wireless interconnecting device, the tag (VLAN identifier) attached to the received packet is removed and the packet is transmitted to the wireless terminal (see the steps S304 and S306 in FIG. 5), and thereby the series of the processing is terminated.

Next, the processing at and after the step S402 is explained referring to FIG. 6.

At the step S402, the received packet is transmitted for transferring to other wireless interconnecting devices corresponding to the judgment that the received packet is a broadcast packet (see the step S034 in FIG. 2)

Then, a destination IP address is read out from the received packet (see the step S404 in FIG. 6) and a judgment is made whether or not a wireless terminal belonging to the same subnetwork as the wireless terminal having the destination IP address exists on the reference table (refer to FIG. 9). (See the step S406 in FIG. 6.) Incidentally, since the specified procedure of the judgment whether or not a wireless terminal belonging to the same subnetwork exists on the reference table is the same as the one described previously at the step S204 (refer to FIG. 4), it is not described here again.

Then, at the step S406, when it is judged that a wireless terminal belonging to the same subnet as the wireless terminal having the destination IP address obtained from the received packet exists on the reference table (in the case of "YES"), since it means that the wireless terminal to which the received packet is to be transmitted is under the control of the wireless interconnecting device, the tag (VLAN identifier) which is attached to the received packet is removed (see the step S412 in FIG. 6), and the packet is transmitted to the wireless terminal (see the step S414 in FIG. 6).

When it is judged at the step S406 that a wireless terminal belonging to the same subnetwork as the wireless terminal having the destination IP address obtained from the received packet does not exist on the reference table (in the case of "NO"), it means that the packet is a limited broadcast as previously described at the step 204.

Therefore, a VLAN identifier is first read out (see the step S408 in FIG. 6) from the received packet, and then whether or not the VLAN identifier exists on the reference table is judged. (See the step S410 in FIG. 6)

When the VLAN identifier is judged to exist on the reference table (in the case of "YES") at the step S410, since it means that a wireless terminal to which the received packet is to be transmitted exists under the control of the wireless interconnecting device, the tag (VLAN identifier) attached to the packet is removed (see the step S412 in FIG 6) and the packet is transmitted to the wireless terminal (VLAN identifier), and thereby the series of the processing is terminated (see the step S414 in FIG. 6).

When the VLAN identifier is judged not to exist on the reference table (in the case of "NO") at the step S410, since it is not necessary to transmit the packet to a wireless terminal which is under the control of the wireless interconnecting device, the series of the processing is terminated.

Thus, the wireless VLAN packet processing described above is executed in the layer 3 type wireless interconnecting device 4, the cable connection type wireless interconnecting device 5, the first and the second non-cable connection type wireless interconnecting devices 6A and 6B, so that the wireless terminals 7a to 7g can be moved freely for operation among the cable connection type wireless interconnecting device 5, the first and the second non-cable connection type wireless interconnecting devices 6A and 6B. To be more specific, for example, it is assumed that the wireless terminal 7b is moved from a state where it is under the control of the first non-cable connection type wireless interconnecting device 6A, namely, a state where it is in the communication range of the first non-cable connection type wireless interconnecting device 6A, to the communication range of the second non-cable connection type wireless interconnecting device 6B, and transmits a packet. It is further assumed that the first and the second non-cable connection type wireless interconnecting devices 6A and 6B are conventional type of wireless interconnecting devices, namely, wireless interconnecting devices which only have the function of simply transferring packets within a subnet, not having the wireless VLAN processing function which is described above referring to FIG. 2 to FIG. 6. In this case, if the wireless terminal 7b is moved to the communication range of the second non-cable connection type wireless interconnecting device 6B and transmits packets, the communication between the second non-cable connection type wireless interconnecting device 6B and the wireless terminal 7b is conventionally impossible with no function added because the first non-cable connection type wireless interconnecting device 6A and the second non-cable connection type wireless interconnecting device 6B belong to different subnets. It has been made possible for the wireless terminal 7b to communicate with the second non-cable connection type wireless interconnecting device 6B only by resetting the IP address of the wireless terminal 7b.

On the other hand, in the embodiment of the present invention, the step S014 and subsequent processing (refer to FIG. 2) are executed when the wireless terminal 7b is moved as described above, so that the wireless terminal 7b can communicate with the second non-cable connection type wireless interconnecting device 6B without setting a new IP address unlike the conventional system. In addition, the move of the wireless terminal 7b is notified to the administrative computer 3 (see the step S018 in FIG. 2), so that the administrative computer 3 can track the location of the wireless terminal 7b.

In other words, in the conventional system, wireless terminals which are under the control of the same wireless interconnecting device usually have to belong to only one subnet. That is, wireless terminals which belong to different subnets are not allowed to exist under one wireless interconnecting device. On the other hand, in the embodiment of the present invention, it becomes possible that wireless terminals belonging to different subnets exist under the control of one wireless interconnecting device.

Incidentally, the packet types exchanged in the above-described configuration are as follows: untagged packets are exchanged between the layer 3 type wireless interconnecting device 4 and the server 2 while tagged packets are exchanged between the layer 3 type wireless interconnecting device 4 and the administrative computer 3, and between the layer 3 type wireless interconnecting device 4 and the cable connection type wireless interconnecting device 5.

Tagged packets are exchanged between the layer 3 type wireless interconnecting device 4 and the first and the second non-cable connection type wireless interconnecting devices 6A and 6B, and untagged packets are exchanged between the first and the second wireless interconnecting devices 6A and 6B and the wireless terminals 7b to 7g.

Between the cable connection type wireless interconnecting device 5 and the wireless terminal 7a, tagged packets are exchanged.

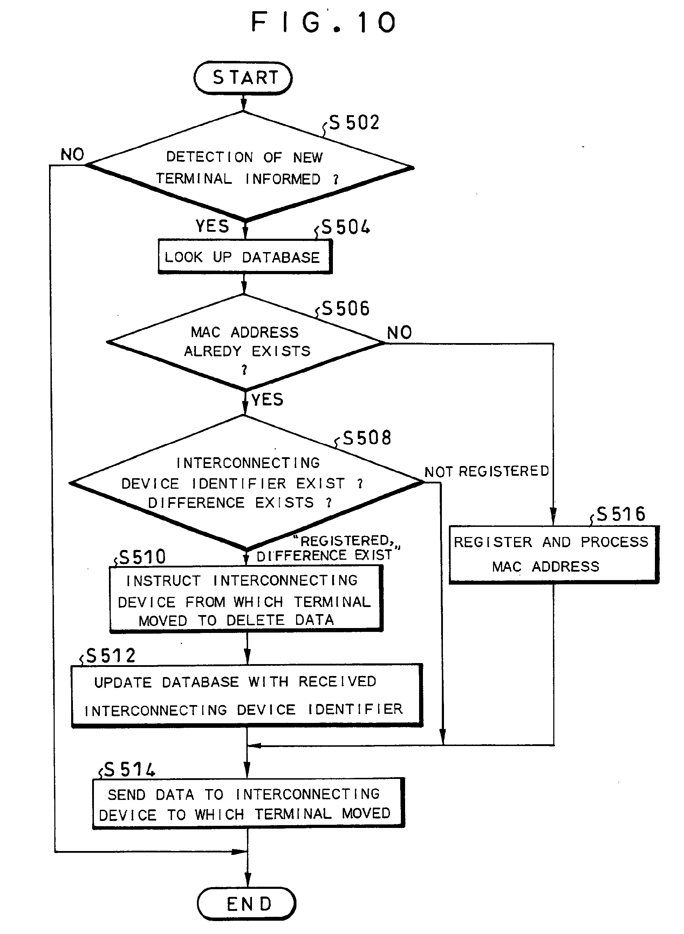

Next, operations in the administrative computer 3 when a wireless terminal is moved and operations in the wireless interconnecting device when a wireless terminal is separated therefrom will be described referring to FIG. 10 to FIG. 12 as it is previously mentioned at the step S018 in FIG. 2.

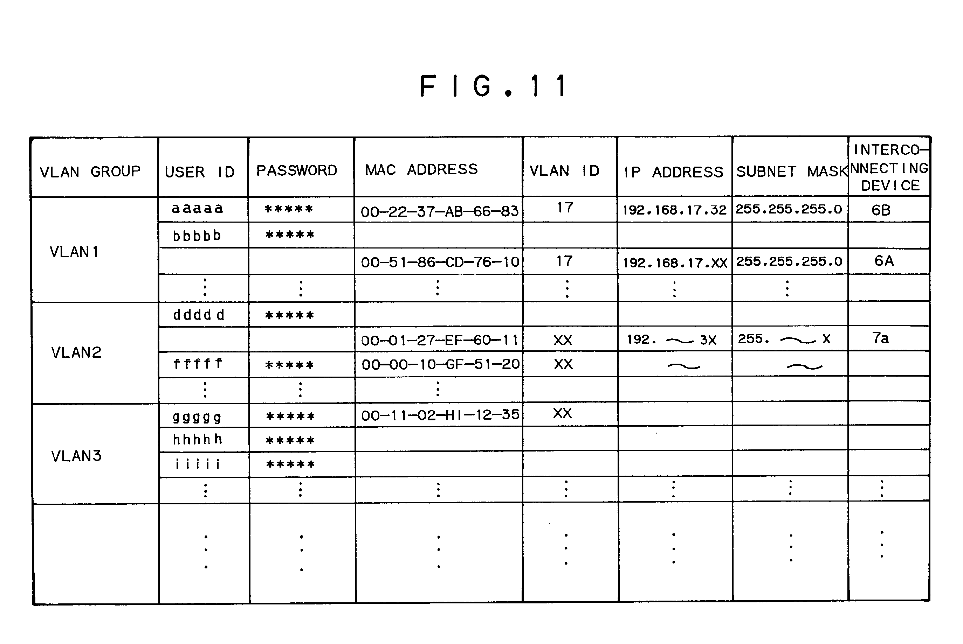

The operations in the administrative computer 3 is first described referring to FIG. 10 and FIG. 11.

When the processing starts, the information transmitted from the wireless interconnecting device at the step S018 (refer to FIG. 2) is received, and whether or not the packet corresponds to a detection of a new terminal is judged (see the step S502 in FIG. 10). In other words, since a message indicating that a new terminal belonging to the wireless interconnecting device is detected is attached to the packet transmitted from the wireless interconnecting device by the processing at the step S018, the administrative computer 3 judges whether or not the message indicating a detection of a new terminal is received.

Then, in a case where the packet received from the wireless interconnecting device is judged to be informing of a detection of a new terminal (in the case of "YES") at the step S502, the processing proceeds to the step S504 which will be described below while the series of processing is terminated when no packet informing of a detection of a new terminal is judged to be received (in the case of "NO").

At the step S504, the database is looked up for the received MAC address.

More specifically, in the administrative computer 3, regarding the wireless terminals 7a to 7g which each are under the control of the wireless interconnecting device 5, 6A or 6B, there stored are, as shown in FIG. 11, for example, the data showing to which VLAN group the MAC address of each of the wireless terminals 7a to 7g belongs with a user ID and a password corresponding thereto, and the above described data corresponding to the MAC address, namely a VLAN identifier, an IP address and a subnet mask, and further, data of identifiers of the wireless interconnecting devices to which the wireless terminals 7a to 7g each belong.

Here, the user ID, namely, the user identification information and the password are known ones which are used from the stand point of ensuring security and so forth at the start of the communication between the wireless terminals and the network. Incidentally, not all of the concrete numerical data is shown in FIG. 11 for convenience and for simplifying the expression of the table, and, instead, partly abbreviated expressions such as "∼", "xx", "**", and alphabets are used.

Further, in FIG. 11, the row expressed with "INTERCONNECTING DEVICE" at the top is the place where the identifiers of the wireless interconnecting devices to which the wireless terminals each belong are recorded.

Looking up of the database is performed to find, in the database as shown in FIG. 11, the same MAC address as the one received.

Then, whether or not the MAC address exists in the database (that is, whether or not the MAC address already exists) is judged (see the step S506 in FIG. 10). When the MAC address is judged not to exist in the database (in the case of "NO"), that is, when the same MAC address as the one received does not exist, the processing proceeds to the step S516.

When the same MAC address is judged to exist in the database (in the case of "YES") at the step S506, whether or not the identifier of the wireless interconnecting device exists in the database and whether or not there is a discrepancy thereof are judged (see the step S508 in FIG. 10). In other words, in the administrative computer 3, since the identifier of the wireless interconnecting device is recognized when a packet is received from the wireless interconnecting device according to the execution of the above-described step S018 (refer to FIG. 2), whether or not the identifier exists in the database and whether or not the identifier is different from the identifier of the wireless interconnecting device corresponding to the received MAC address are judged (see the step S508 in FIG. 10).

If a wireless terminal changes the wireless interconnecting device to which it belongs, assuming that both the wireless terminal and the wireless interconnecting device are registered in advance in the administrative computer 3, the identifier of the wireless interconnecting device corresponding to the MAC address of the wireless terminal recorded in the database is found to be different from the identifier of the wireless interconnecting device which received the packet at the step S018. Then, the administrative computer 3 detects the discrepancy of the identifiers of the wireless interconnecting devices, so that it can recognize that the terminal is moved. Therefore, in this case, the processing proceeds to the step S510.

If the judgment result at the step S508 is other than that the identifier exists in the database and is different from the identifier of a wireless interconnecting device corresponding to the received MAC address, the processing proceeds to the step S514 which will be described later. An example of such cases which can most possibly occur is a case where the identifier of the wireless interconnecting device does not exists in the database, which means that a terminal which belonged to no wireless interconnecting device is detected. Another example is a case where the identifier of the wireless interconnecting device corresponding to the MAC address of the wireless terminal recorded in the database is the same with the identifier of the wireless interconnecting device which received the packet at the step S018. Although usually such a case is not possible, a possible case is that some data such as the reference table is broken in the wireless interconnecting device by some cause.

In these cases, VLAN information such as a VLAN identifier, an IP address and a subnet mask of the wireless terminal having the MAC address is transmitted (see the step S514 in FIG. 10) to the wireless interconnecting device which transmitted the MAC address (see the step S018 in FIG. 2), and thereby the series of the processing is terminated.

Then, at the step S510, the interconnecting device from which the terminal is separated (the interconnecting device to which the terminal previously belonged) is instructed to delete the data such as the MAC address of the wireless terminal and the VLAN identifier corresponding thereto (related information) from the reference table described above referring to FIG. 9 (see the step S510 in FIG. 10).

In the administrative computer 3, the database is updated (see the step S512 in FIG. 10) using the identifier of the wireless interconnecting device which transmitted the MAC address of the wireless terminal at the step S018 (refer to FIG. 2). More specifically, regarding the wireless terminal having the MAC address sent at the step S018, the identifier of the wireless interconnecting device, which are stored to correspond to the MAC address of the wireless terminal, the VLAN ID, the IP address and the subnet mask in the database stored in the administrative computer 3, are replaced with those of the wireless interconnecting device which sent the MAC address at the step S018.

Then, the updated data is sent to the wireless interconnecting device which sent the MAC address, namely the interconnecting device to which the wireless terminal is moved (in other words, the interconnecting device which receives the MAC address) by the administrative computer 3 (see the step S514 in FIG. 10) as described above, and thereby the series of processing is terminated.

If the sent MAC address is judged not to exist (in the case of "NO") at the step S506, the MAC address is registered in the administrative computer 3 (see the step S516 in FIG. 10). Incidentally, since the registration of the MAC address may take various forms such as a form in which a MAC address is immediately registered to the database in the administrative computer 3 or a form in which a known certification is once performed using a user ID and a password and only a certified MAC address is registered, it does not have to be limited to a particular registration form. Further, the MAC address registration may be not only automatically performed in the administrative computer 3 in the manner described above but also performed by notifying an administrator of the administrative computer 3 that a registration of the MAC address is required in the administrative computer 3 so that the registration can be performed only by a manual input by the administrator, and, therefore, the registration does not need to be limited to an automatic or a manual manner.

After the MAC address registration is performed, the VLAN ID and so forth related to the MAC address are sent to the wireless interconnecting device to which the terminal is moved as described above at the step S514, and thereby the series of processing is terminated.

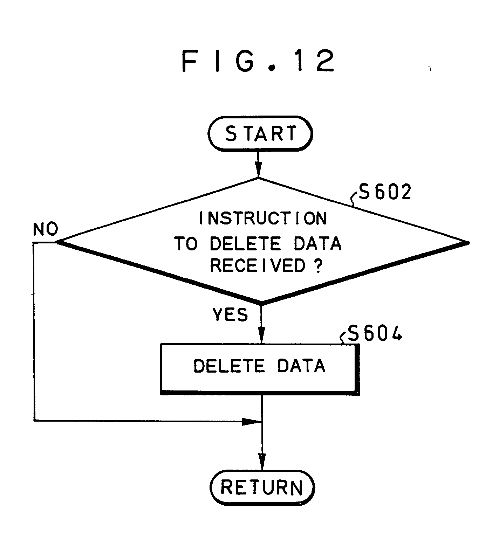

Next, the operation in the wireless interconnecting device which is instructed to delete data by the administrative computer 3 as described above will be described below referring to FIG. 12.

When the processing is started, whether or not the above described instruction to delete the data is received from the administrative computer 3 is judged (see the step S602 in FIG. 12), and, if the instruction to delete the data is judged to be not received (in the case of "NO"), the processing terminates this subroutine and returns to the main processing.

If the instruction to delete the data is judged to be received at the step S602 (in the case of "YES"), data such as a MAC address of a wireless terminal designated by the reference table (refer to FIG. 9) and a VLAN identifier corresponding thereto (related information) are deleted, and thereby the series of processing is terminated (see the step S604 in FIG. 12).

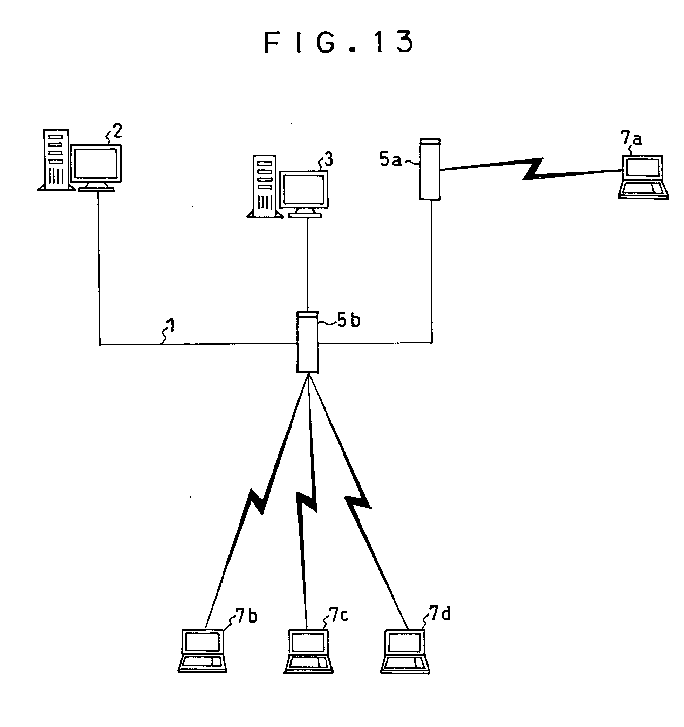

Next, another configuration example of the wireless LAN system is explained referring to FIG. 13. Incidentally, the same reference numerals and signs will be used to designate the same or similar components as those shown in FIG. 1, so that the detailed description will be omitted, and differences are mainly described below.

In the configuration shown in FIG. 1, the layer 3 type wireless interconnecting device 4 is used. However, the layer 3 type wireless interconnecting device 4 is not always necessary and a configuration in which only the cable connection type wireless interconnecting devices 5a and 5b as wireless interconnecting devices are connected to the LAN backbone line 1 (refer to FIG. 13) is also possible. That is, the cable connection type wireless interconnecting devices 5a and 5b have the same function as the cable connection type wireless interconnecting device 5 in the configuration example shown in FIG. 1.

Incidentally, since the packet processing executed by the cable connection type wireless interconnecting devices 5a and 5b in the configuration is basically the same with the processing described above with reference to FIG. 2 to FIG. 12, it will not be described in detail here again.

In the above embodiment of the present invention, although a processing procedure in the administrative computer 3 for detecting the movement of a wireless terminal when the wireless terminal is moved in a wireless LAN system is shown, the procedure does not need to be limited to be performed in the wireless VLAN system and, as a matter of course, it is basically applicable to terminals in a wired LAN system as well.

The detection method for movement of a terminal in a LAN system, in the above embodiment of the present invention, is applied to a MAC address-based LAN as a form of LAN but the application does not need to be limited to the form and can also be applied to, for example, a known so-called port-based VLAN as a matter of course. Incidentally, in the case of the port-based VLAN, it is appropriate to add to the database shown in FIG. 11 information on port numbers assigned to terminals.

As described above, in a wireless interconnecting device of a wireless LAN system according to the present invention, in a case where a received packet needs to be sent to a wireless terminal belonging to the wireless interconnecting device, the packet is sent with a tag removed when the packet is tagged, while, in a case where the packet needs to be transferred, whether or not a VLAN identifier needs to be attached is judged and a VLAN identifier is attached to enable the packet to be transferred when it is necessary, so that a packet processing without a problem in a VLAN is realized. Therefore, wireless terminals belonging to different subnets are allowed to exist under the control of one wireless interconnecting device as is different from conventional systems, and the advantage is obtained that a wireless VLAN system is realized in which the primary function of a radio LAN can be sufficiently utilized.

Moreover, according to the present invention, resetting of the IP address is not required unlike the conventional system even if a wireless terminal is moved to be under a different wireless interconnecting device, so that an advantage is obtained that a wireless VLAN system having excellent usability is provided.

Furthermore, since the packet processing is executed by the wireless interconnecting device after a judgment whether or not the packet needs to be sent to a wireless terminal belonging to the wireless interconnecting device, an advantage is obtained that occurrence of useless traffic is suppressed and efficient packet exchange is executed.

Furthermore, even if a wireless terminal is moved to a different wireless interconnecting device, since it is not necessary to change VLAN group, an advantage is obtained that so-called security is better ensured than conventional systems and high reliability is realized.

Furthermore, according to the present invention, since a movement of a terminal is judged by using the database of terminals stored in advance in the administrative computer, unlike conventional systems, an advantage is obtained that the movement of the terminal can be detected by a simple processing.

Furthermore, since a packet having a content instructing to delete information on a moved terminal is sent only to a interconnecting device from which the terminal is separated, unlike conventional systems, an advantages is obtained that useless traffic is not caused so that processing required according to a movement can be performed smoothly without lowering traffic efficiency.

A layer 3 type wireless interconnecting device connected to a LAN backbone line is enabled to exchange packets with wireless terminals via a cable connection type wireless interconnecting device, non-cable connection type wireless interconnecting devices, and these wireless interconnecting devices each are configured so that, in a case where a received packet is to be transmitted to the wireless terminals belonging thereto, the packet is transmitted with a tag removed when the packet is tagged, while, when the packet is to be transferred, whether or not a VLAN identifier needs to be attached thereto is judged and the packet is transferred with a VLAN identifier attached thereto when necessary, and thereby a wireless VLAN is realized.

## Claims

1. Wireless VLAN construction method in a wireless LAN system in which a LAN backbone line wired with network devices is provided with wireless terminals enabled to exchange packets with wired side via a wireless interconnecting device, wherein
in said wireless interconnecting device, a VLAN group is assigned to each of the wireless terminals belonging to the wireless interconnecting device based upon a MAC address of each of the wireless terminals, and administrative information on the wireless terminals is stored, and
in the wireless interconnecting device, whether a received packet is tagged or untagged is judged, and, in a case where the packet is judged to be tagged, the packet is transmitted with a tag removed when the packet is unicast and needs to be transmitted to a wireless terminal belonging to the wireless interconnecting device, while the packet is transferred when the packet is broadcast, and transmitted with the tag removed when the packet is broadcast and needs to be transmitted to a wireless terminal belonging to the wireless interconnecting device, and,
in a case where the received packet is judged to be untagged in the judgment whether the received packet is tagged or untagged, when the untagged packet is unicast, a corresponding VLAN identifier is obtained from said administrative information based upon a destination MAC address of the packet and the packet is transferred with the VLAN identifier attached thereto, while, when the untagged packet is broadcast, a corresponding VLAN identifier is obtained from said administrative information based upon a destination IP address of the packet and the packet is transferred with the VLAN identifier attached thereto, and thereby the wireless VLAN is realized.

2. Method according to claim 1, **characterized in that** said administrative information includes the VLAN identifier, the IP address and a subnet mask related to the MAC address of the wireless terminal.

3. Method according to claim 1 or 2, **characterized in that** when the received packet is tagged and broadcast, whether or not the packet needs to be transmitted to the wireless terminal belonging to the wireless interconnecting device is judged according to a judgment whether or not a wireless terminal belonging to the same subnetwork as the subnetwork to which the destination IP address of the packet belongs exists in said administrative information, and, when the wireless terminal is judged to exist in said administrative information, the packet is judged to be transmitted to the wireless terminal belonging to the wireless interconnecting device.

4. Method according to any one of the preceding claims, **characterized in that** in the judgment whether or not the wireless terminal belonging to the same subnetwork as the subnetwork to which the destination IP address of the packet belongs exists in said administrative information, when the wireless terminal is judged not to exist in said administrative information, a VLAN identifier is obtained from the packet to judge whether or not the VLAN identifier exists in said administrative information, and, when the VLAN identifier is judged to exist in said administrative information, the packet is judged to be transmitted to the wireless terminal belonging to the wireless interconnecting device.

5. Method according to any one of the preceding claims, **characterized in that** in a case where the received packet is the untagged packet and unicast, transferring of the packet to which the VLAN identifier obtained based upon the destination MAC address of the packet is attached is executed when whether or not the destination MAC address of the received packet exists in said administrative information is judged and the destination MAC address is judged not to exist in said administrative information, the acquisition of the VLAN identifier from said administrative information based upon the destination MAC address being executed by obtaining the source MAC address from the received packet and then obtaining the VLAN identifier corresponding to the source MAC address from said administrative information.

6. Method according to any one of the preceding claims, **characterized in that** in a case where the received packet is the untagged packet and broadcast, transferring of the packet to which the VLAN identifier obtained based upon the destination IP address of the packet is attached is executed when whether or not a wireless terminal belonging to the same subnetwork as the subnetwork to which said destination IP address belongs exists in said administrative information is judged and the wireless terminal is judged to exist in said administrative information, by obtaining the VLAN identifier of the wireless terminal from said administrative information and attaching the obtained VLAN identifier to the untagged packet.

7. Method according to any one of the preceding claims, **characterized in that** in a case where the received packet is the untagged packet and broadcast, transferring of the packet to which the VLAN identifier obtained based upon the destination IP address of the packet is attached is executed when a wireless terminal belonging to the same subnetwork as the subnetwork to which the destination IP address belongs is judged not to exist in said administrative information, by obtaining the source MAC address from the untagged packet and then obtaining the VLAN identifier corresponding to the source MAC address from said administrative information and attaching the obtained VLAN identifier to the untagged packet.

8. VLAN packet processing program for a wireless interconnecting device executed therein for constructing a wireless VLAN in a wireless LAN system in which a LAN backbone line wired with network devices is provided with wireless terminals enabled to exchange packets with wired side via said wireless interconnecting device, wherein,
the VLAN packet processing program enables said wireless interconnecting device to assign a VLAN group to each of the wireless terminals belonging to said wireless interconnecting device based upon a MAC address of each of the wireless terminals, and causes said wireless interconnecting device to store administrative information on the wireless terminals as a reference table, and
causes said wireless interconnecting device to perform the following VLAN packet processing steps:
whether a received packet is tagged or untagged is judged, and, in a case where the packet is judged to be tagged, the packet is transmitted with a tag removed when the packet is unicast and needs to be transmitted to a wireless terminal belonging to the wireless interconnecting device, while the packet is transferred when the packet is broadcast, and transmitted with the tag removed when the packet is broadcast and needs to be transmitted to a wireless terminal belonging to the wireless interconnecting device, and,
in a case where the received packet is judged to be untagged in the judgment whether the received packet is tagged or untagged, when the untagged packet is unicast, a corresponding VLAN identifier is obtained from said administrative information based upon a destination MAC address of the packet and the packet is transferred with the VLAN identifier attached thereto, while, when the untagged packet is broadcast, a corresponding VLAN identifier is obtained from said administrative information based upon a destination IP address of the packet and the packet is transferred with the VLAN identifier attached thereto.

9. Program according to claim 8, **characterized in that** said administrative information includes the VLAN identifier, the IP address and a subnet mask related to the MAC address of the wireless terminal.

10. Program according to claim 8 or 9, **characterized in that** the VLAN packet processing program causes said wireless interconnecting device to perform the following steps:
when the received packet is tagged and broadcast, whether or not the packet needs to be transmitted to a wireless terminal belonging to the wireless interconnecting device is judged according to a judgment whether or not a wireless terminal belonging to the same subnetwork as the subnetwork to which the destination IP address of the packet belongs exists in said administrative information, and, when the wireless terminal is judged to exist in said administrative information, the packet is judged to be transmitted to the wireless terminal belonging to the wireless interconnecting device.

11. Program according to any one of claims 8 to 10, **characterized in that** the program causes said wireless interconnecting device to execute the following steps:
in the judgment whether or not a wireless terminal belonging to the same subnetwork as the subnetwork to which the destination IP address of the packet belongs exists in said administrative information, when the wireless terminal is judged not to exist in said administrative information, a VLAN identifier is obtained from the packet to judge whether or not the VLAN identifier exists in said administrative information, and, when the VLAN identifier is judged to exist in said administrative information, the packet is judged to be transmitted to a wireless terminal belonging to the wireless interconnecting device.

12. Program according to any one of claims 9 to 11, **characterized in that** the program causes said wireless interconnecting device to execute the following steps:
in a case where the received packet is untagged and unicast, transferring of the packet to which a VLAN identifier obtained based upon the destination MAC address of the packet is attached is executed when whether or not the destination MAC address of the received packet exists in said administrative information is judged and the destination MAC address is judged not to exist in said administrative information, the acquisition of the VLAN identifier from said administrative information based upon the destination MAC address being executed by obtaining a source MAC address from the received packet and then obtaining a VLAN identifier corresponding to the source MAC address from said administrative information.

13. Program according to any one of claims 8 to 12, **characterized in that** the program causes said wireless interconnecting device to execute the following steps:
in a case where the received packet is untagged and broadcast, transferring of the packet to which a VLAN identifier obtained based upon the destination IP address of the packet is attached is executed when whether or not a wireless terminal belonging to the same subnetwork as the subnetwork to which said destination IP address belongs exists in said administrative information is judged and the wireless terminal is judged to exist in said administrative information, by obtaining the VLAN identifier of the wireless terminal from said administrative information and attaching the obtained VLAN identifier to the untagged packet.

14. Program according to any one of claims 8 to 13, **characterized in that** the program causes said wireless interconnecting device to execute the following steps:
in a case where the received packet is untagged and broadcast, transferring of the packet to which a VLAN identifier obtained based upon the destination IP address of the packet is attached is executed when a wireless terminal belonging to the same subnetwork as the subnetwork to which the destination IP address belongs is judged not to exist in said administrative information, by obtaining a source MAC address from the untagged packet and then obtaining a VLAN identifier corresponding to the source MAC address from said administrative information and attaching the obtained VLAN identifier to the untagged packet.

15. Recording medium on which is recorded a computer-readable VLAN packet processing program for a wireless interconnecting device to be executed therein for constructing a wireless VLAN in a wireless LAN system in which a LAN backbone line wired with network devices is provided with wireless terminals enabled to exchange packets with wired side via said wireless interconnecting device, wherein
the VLAN packet processing program enables said wireless interconnecting device to assign a VLAN group to each of the wireless terminals belonging to said wireless interconnecting device based upon a MAC address of each of the wireless terminals,
and causes said wireless interconnecting device to store administrative information on the wireless terminals as a reference table, and
causes said wireless interconnecting device to perform the following VLAN packet processing steps:
whether a received packet is tagged or untagged is judged, and, in a case where the packet is judged to be tagged, the packet is transmitted with a tag removed when the packet is unicast and needs to be transmitted to a wireless terminal belonging to the wireless interconnecting device, while the packet is transferred when the packet is broadcast, and transmitted with the tag removed when the packet is broadcast and needs to be transmitted to a wireless terminal belonging to the wireless interconnecting device, and,
in a case where the received packet is judged to be untagged in the judgment whether the received packet is tagged or untagged, when the untagged packet is unicast, a corresponding VLAN identifier is obtained from said administrative information based upon a destination MAC address of the packet and the packet is transferred with the VLAN identifier attached thereto, while, when the untagged packet is broadcast, a corresponding VLAN identifier is obtained from said administrative information based upon a destination IP address of the packet and the packet is transferred with the VLAN identifier attached thereto.

16. Recording medium according to claim 15, **characterized in that** said administrative information includes the VLAN identifier, the IP address and a subnet mask related to the MAC address of the wireless terminal.

17. Recording medium according to claim 15 or 16, **characterized in that** the program causes said wireless interconnecting device to perform the following steps:
when the received packet is tagged and broadcast, whether or not the packet needs to be transmitted to the wireless terminal belonging to the wireless interconnecting device is judged according to a judgment whether or not a wireless terminal belonging to the same subnetwork as the subnetwork to which the destination IP address of the packet belongs exists in said administrative information, and, when the wireless terminal is judged to exist in said administrative information, the packet is judged to be transmitted to the wireless terminal belonging to the wireless interconnecting device.

18. Recording medium according to any one of claims 15 to 17, **characterized in that** the program causes said wireless interconnecting device to execute the following steps:
in the judgment whether or not the wireless terminal belonging to the same subnetwork as the subnetwork to which the destination IP address of the packet belongs exists in said administrative information, when the wireless terminal is judged not to exist in said administrative information, a VLAN identifier is obtained from the packet to judge whether or not the VLAN identifier exists in said administrative information, and, when the VLAN identifier is judged to exist in said administrative information, the packet is judged to be transmitted to the wireless terminal belonging to the wireless interconnecting device.

19. Recording medium according to any one of claims 15 to 18, **characterized in that** the program causes said wireless interconnecting device to execute the following steps:
in a case where the received packet is the untagged packet and unicast, transferring of the packet to which the VLAN identifier obtained based upon the destination MAC address of the packet is attached is executed when whether or not the destination MAC address of the received packet exists in said administrative information is judged and the destination MAC address is judged not to exist in said administrative information, the acquisition of the VLAN identifier from said administrative information based upon the destination MAC address being executed by obtaining the source MAC address from the received packet and then obtaining the VLAN identifier corresponding to the source MAC address from the administrative information.

20. Recording medium according to any one of claims 15 to 19, **characterized in that** the program causes said wireless interconnecting device to execute the following steps:
in a case where the received packet is the untagged packet and broadcast, transferring of the packet to which the VLAN identifier obtained based upon the destination IP address of the packet is attached is executed when whether or not a wireless terminal belonging to the same subnetwork as the subnetwork to which said destination IP address belongs exists in said administrative information is judged and the wireless terminal is judged to exist in said administrative information, by obtaining the VLAN identifier of the wireless terminal from said administrative information and attaching the obtained VLAN identifier to the untagged packet.

21. Recording medium according to any one of claims 15 to 20, **characterized in that** the program causes said wireless interconnecting device to execute the following steps:
in a case where the received packet is the untagged packet and broadcast, transferring of the packet to which the VLAN identifier obtained based upon the destination IP address of the packet is attached is executed when a wireless terminal belonging to the same subnetwork as the subnetwork to which the destination IP address belongs is judged not to exist in said administrative information, by obtaining the source MAC address from the untagged packet and then obtaining the VLAN identifier corresponding to the source MAC address from said administrative information and attaching the obtained VLAN identifier to the untagged packet.

22. Wireless interconnecting device having VLAN function in a wireless LAN system in which a LAN backbone line wired with network devices is provided with wireless terminals enabled to exchange packets with wired side via said wireless interconnecting device, wherein
said wireless interconnecting device is enabled to assign a VLAN group to each of the wireless terminals belonging thereto based on a MAC address of each of the wireless terminals and to store administrative information of the wireless terminals, and
said wireless interconnecting device judges whether a received packet is tagged or untagged and, in a case where the packet is judged to be tagged, transmits the packet with a tag removed when the packet is unicast and needs to be transmitted to a wireless terminal belonging to the wireless interconnecting device, while transferring the packet when the packet is broadcast, and transmitting the packet with the tag removed when the packet is broadcast and needs to be transmitted to a wireless terminal belonging to the wireless interconnecting device, and,
in a case where the received packet is judged to be untagged in the judgment whether the received packet is tagged or untagged, when the untagged packet is unicast, obtains a corresponding VLAN identifier from said administrative information based upon a destination MAC address of the packet and transfers the packet with the VLAN identifier attached thereto, while, when the untagged packet is broadcast, obtaining a corresponding VLAN identifier from said administrative information based upon a destination IP address of the packet and transferring the packet with the VLAN identifier attached thereto.

23. Device according to claim 22, **characterized in that** said administrative information includes the VLAN identifier, the IP address and a subnet mask related to the MAC address of the wireless terminal.

24. Device according to claim 22 or 23, **characterized in that** when the received packet is tagged and broadcast, the wireless interconnecting device judges whether or not the packet needs to be transmitted to the wireless terminal belonging to the wireless interconnecting device according to a judgment whether or not a wireless terminal belonging to the same subnetwork as the subnetwork to which the destination IP address of the packet belongs exists in said administrative information, and, when the wireless terminal is judged to exist in said administrative information, the wireless interconnecting device judges the packet to be transmitted to the wireless terminal belonging to the wireless interconnecting device.

25. Device according to any one of claims 22 to 24, **characterized in that** in the judgment whether or not the wireless terminal belonging to the same subnetwork as the subnetwork to which the destination IP address of the packet belongs exists in said administrative information, when the wireless terminal is judged not to exist in said administrative information, the wireless interconnecting device obtains a VLAN identifier from the packet to judge whether or not the VLAN identifier exists in said administrative information, and, when the VLAN identifier is judged to exist in said administrative information, the wireless interconnecting device judges the packet to be transmitted to the wireless terminal belonging to the wireless interconnecting device.

26. Device according to any one of claims 22 to 25, **characterized in that** in a case where the received packet is the untagged packet and unicast, transferring of the packet to which the VLAN identifier obtained based upon the destination MAC address of the packet is attached is executed when whether or not the destination MAC address of the received packet exists in said administrative information is judged and the destination MAC address is judged not to exist in said administrative information, the acquisition of the VLAN identifier from said administrative information based upon the destination MAC address being executed by obtaining the source MAC address from the received packet and then obtaining the VLAN identifier corresponding to the source MAC address from said administrative information.

27. Device according to any one of claims 22 to 26, **characterized in that** in a case where the received packet is the untagged packet and broadcast, transferring of the packet to which the VLAN identifier obtained based upon the destination IP address of the packet is attached is executed when whether or not a wireless terminal belonging to the same subnetwork as the subnetwork to which said destination IP address belongs exists in said administrative information is judged and the wireless terminal is judged to exist in said administrative information, by obtaining the VLAN identifier of the wireless terminal from said administrative information and attaching the obtained VLAN identifier to the untagged packet.

28. Device according to any one of claims 22 to 27, **characterized in that** in a case where the received packet is the untagged packet and broadcast, transferring of the packet to which the VLAN identifier obtained based upon the destination IP address of the packet is attached is executed when a wireless terminal belonging to the same subnetwork as the subnetwork to which the destination IP address belongs is judged not to exist in said administrative information, by obtaining the source MAC address from the untagged packet and then obtaining the VLAN identifier corresponding to the source MAC address from said administrative information and attaching the obtained VLAN identifier to the untagged packet.

29. Wireless VLAN system comprising a wireless interconnecting device, in which a LAN backbone line wired with network devices is provided with wireless terminals enabled to exchange packets with wired side via said wireless interconnecting device, wherein said wireless interconnecting device is the wireless interconnecting device having the VLAN function according to any one of claims 22 to 28.

30. Method for detecting a movement of a terminal in a LAN system, comprising the steps of:
receiving, in an administrative device, device identification information of a moved terminal transmitted from a interconnecting device to which the terminal is moved, and
judging that the terminal is moved when a discrepancy of information on the terminal having the device identification information is found in a database composed of information on terminals stored in advance in said administrative device together with the device identification information.

31. Method according to claim 30, **characterized in that** when a discrepancy of information on a terminal having the device identification information is found, said administrative device updates said database and transmits the updated data to the wireless interconnecting device from which the device identification information is transmitted.

32. Method according to claim 30 or 31, **characterized in that** when the discrepancy of the information on the terminal having the device identification information is found, said administrative device instructs a interconnecting device from which the terminal is moved to delete the device identification information of the terminal and related information.

33. Program for detecting and processing a movement of a terminal to be executed in an administrative device provided in a LAN system to perform administration of the system, comprising the following steps:
a first step to receive device identification information of a moved terminal from a interconnecting device to which the terminal is moved;
a second step to detect a discrepancy of information in a database composed of information on terminals stored in advance in said administrative device together with the device identification information; and
a third step to update said database according to a judgment that the terminal is moved when the discrepancy of the information on the terminal having the device identification information is found in said database.

34. Program according to claim 33, **characterized in that** said program further comprises a fourth step, after the update, to transmit the updated data to the interconnecting device from which the device identification information is transmitted.

35. Program according to claim 33 or 34, **characterized in that** said program further comprises a fifth step, when the discrepancy of the information on the terminal having the device identification information is detected, to instruct a interconnecting device from which the terminal is moved to delete the device identification information of the terminal and related information.

36. Recording medium on which recorded is a program for detecting and processing a movement of a terminal to be executed in an administrative device provided in a LAN system to perform administration of the system, wherein said program comprises the following steps:
a first step to receive device identification information of a moved terminal from a interconnecting device to which the terminal is moved;
a second step to detect a discrepancy of information in a database composed of information on terminals stored in advance in said administrative device together with the device identification information; and
a third step to update said database according to a judgment that the terminal is moved when the discrepancy of the information on the terminal having the device identification information is found in said database.
a fourth step, after updating said database, to transmit the updated data to the interconnecting device from which the device identification information is transmitted; and
a fifth step, when the discrepancy of the information on the terminal is detected, to instruct a interconnecting device from which the terminal is moved to delete the device identification information of the terminal and related information.

37. Administrative device provided in a LAN system to perform administration of the system, wherein said administrative device, receiving device identification information of a moved terminal from a interconnecting device to which the terminal is moved, judges that the terminal is moved when a discrepancy of information on a terminal having the device identification information is found in a database composed of information on terminals stored in advance in said administrative device together with the device identification information, and, after updating said database, transmits the updated data to the interconnecting device from which the device identification information is transmitted while instructing a interconnecting device from which the terminal is moved to delete the device identification information of the terminal and related information.

38. LAN system to which network devices are connected to exchange packets thereamong, comprising an administrative device for performing administration of the system, wherein said administrative device is an administrative device according to claim 37.

39. Recording medium, preferably according to any one of claims 15 to 22 or 36, **characterized in that** a program according to any one of claims 8 to 14 or 33 to 35 is recorded on the recording medium.
